# EUROPÄISCHE PATENTANMELDUNG

(11) **EP 3 748 267 A1**
(43) Veröffentlichungstag der Anmeldung: **09.12.2020**
(21) Anmeldenummer: 19178258.0
(22) Anmeldetag: 04.06.2019
(51) Int. Cl.: F27D 21/00, F27D 19/00, C21C 5/52, F27D 21/02

(54) **VERFAHREN ZUR STEUERUNG ODER REGELUNG EINER INDUSTRIEANLAGE**

(71) Anmelder: Primetals Technologies Austria GmbH, 4031 Linz (AT)
(72) Erfinder: Fischer, Paul, 4040 Linz (AT); Hartl, Franz, 4720 Kallham (AT); Rohrhofer, Andreas, 4020 Linz (AT); Steinparzer, Thomas, 4040 Linz (AT); Fleischanderl, Alexander, 4645 Gruenau (AT); Mayrhofer, Anna, 4722 Peuerbach (AT)
(74) Vertreter: Metals@Linz

(57) **Zusammenfassung**

Die Erfindung betrifft das Gebiet der Industrieanlagen insbesondere von metallurgischen Anlagen, konkret eine Industrieanlage (1), welche unterschiedliche Prozessphasen aufweist.

Die Aufgabe der Erfindung ist ein Verfahren zur Steuerung oder Regelung einer Industrieanlage (1) zu schaffen, um diese besonders verschleißarm und energieeffizient zu betreiben. Diese Aufgabe wird durch ein optisches Sensorsystem (2), insbesondere eine Kamera, gelöst. Durch eine Automatisierungseinheit (3) wird das optische Sensorsystem (2) derart gesteuert, dass je nach Prozessphase zumindest ein vorbestimmter Bereich (6) der Industrieanlage (1) erfasst wird und Ausschwallen von Rauchgasen (8, 8a) in dem vorbestimmten Bereich (6) erkannt wird. Das optische Sensorsystem (2) quantifiziert eine Gesamtmenge des ausschwallenden Rauchgases (8, 8a), wobei die Automatisierungseinheit, aufgrund der quantifizierten Gesamtmenge, zumindest eine Komponente der Industrieanlage (1), insbesondere zumindest eine Komponente einer Entstaubungsanlage (18), steuert oder regelt.

## Beschreibung

### Gebiet der Technik

Die vorliegende Erfindung betrifft das Gebiet der Industrieanlagen.

Einerseits betrifft die Erfindung ein Verfahren zur Steuerung oder Regelung einer Industrieanlage, insbesondere einer metallurgischen Anlage, welche unterschiedliche Prozessphasen aufweist, umfassend zumindest ein optisches Sensorsystem, insbesondere einer Kamera.

Andererseits betrifft die Erfindung eine Industrieanlage, insbesondere eine metallurgische Anlage mit einem optischen Sensorsystem.

### Stand der Technik

Gegenwärtig wird eine Absaugung von Abgasemissionen Industrieanlagen, insbesondere einer metallurgischen Anlage, auf der Basis einer Unterdruckmessung oder einer vorgegebenen Klappenposition einer Absaugstelle gesteuert bzw. geregelt. Unterdruckmessungen befinden sich beispielweise im Kühlkamin eines BOF (Blast Oxygen Furnace) - Konverters, in einer Absaughaube eines BOF-Konverters oder im Ofendeckel eines Elektrolichtbogenofens (EAF).

Im Falle eines BOF (Basic Oxygen Furnace) erfolgt die Druckmessung beispielsweise im Kühlkamin über eine Ringleitung mit multiplen Auslässen, welche in die Kühlgasleitung geführt werden. Ein an die Ringleitung angeschlossener Drucksensor liefert einen über alle Auslässe gemittelten Druckmesswert.

Ein EAF (Electric Arc Furnace) hat beispielsweise zwei Sensoröffnungen im Deckel um einen Druck in einem Brennraum zu erfassen. Aufgrund der hohen Umgebungstemperaturen und sehr rauer Bedingungen am Ofendeckel wird die Druckmessleitung über eine Verrohrung und einer flexiblen Verbindung z.B. in Richtung einer Transformatorhauswand geführt, wo ein Druckmessumformer montiert ist. Der Druckmessumformer liefert einen gemittelten Druckwert, der den Druck im Brennraum repräsentiert, an das bauseitige Automatisierungssystem.

Bei einem BOF oder EAF kommt es aufgrund des Prozesses zu Druckschwankungen im Brennraum, welche durch die Druckmessung erfasst und durch ein Saugzuggebläse - welches einer Entstaubungsanlage zugeordnet ist - kompensiert werden müssen. Ziel ist es einen definierten Unterdruck im Brennraum zu gewährleisten, um ein Ausschwallen von Rauchgasen und Emissionen zu vermeiden.

Ein fehlerbehafteter Messwert der Druckmessung führt zu einem falschen Arbeitspunkt des Absauggebläses oder einer Klappenposition einer Absaugstelle, wodurch unerwünschtes Ausschwallen von Rauchgasen entsteht.

Bei EAF Primärentstaubungen führt ein zu hoher Unterdruck im Verbrennungsraum zu hohen Wärmeverlusten, da dem Prozess unnötig Wärme entzogen wird und sich dadurch die Energiebilanz für den Schmelzprozess verschlechtert.

Zu hoher Unterdruck bewirkt des Weiteren auch einen erhöhten Elektrodenverbrauch, da direkt an den Deckelöffnungen - Ringspalte im Deckelherz - Falschluft angesaugt wird, welche zu einem verstärkten Abbrand der Elektroden führt.

Falsche Messwerte zeigen deutliche Tendenz in Richtung zu geringem Messwert und führen zu falschen erhöhten Absaugleistungen, wodurch es zu erhöhtem Energie- und Elektrodenverbrauch kommen kann.

Für die BOF Sekundärentstaubung sind hohe Saugzuggebläse Leistungen erforderlich - typisch 2-3 MW je Saugzuggebläse - welche in einem Arbeitspunkt betrieben werden sollen, bei welchem alle bei einer Chargierung von Schrott entstehenden Rauchgase abgesaugt werden können. Um ein Ausschwallen von Rauchgasen aufgrund von Fehlmessungen zu verhindern, wird derzeit die Saugzuggebläse Leistung während eines Roheisen-Chargier Prozesses üblicherweise durch ein vollständiges Öffnen der Klappenposition der Absaugstelle geregelt um die maximale Saugzuggebläse Leistung zu erzielen. Hohe Energiekosten sind die Folge.

Für eine BOF Primärentstaubung wird mithilfe der Unterdruckmessung eine entsprechende Absaugmenge im Kühlkamin eingestellt. Ein zu hoher Unterdruck bewirkt eine vermehrte Absaugung von Umgebungsluft über einen Schließring und anderen Öffnungen (Lanzenstutzen etc.). Diese führt zu einer vermehrten Nachverbrennung des im Abgas enthaltenen CO zu CO2 im Kühlkamin. Dadurch wird die Konzentration des speicherbaren/wiederverwendbaren CO Gases reduziert und der Kühlkamin thermisch höher beansprucht.

Obige Beschreibung gilt grundsätzlich für alle Staubemissionen in metallurgischen Anlagen - z.B. Pfannenöfen, Materialwirtschaft, Brennschneidmaschinen, Emissionen über Dach, etc.. Derzeit werden alle Absaugeinrichtungen / Entstaubungsanlagen entweder durch eine vorgegebene Position der Absaugklappe oder durch Unterdruck, Temperatur oder Volumenstrom an der Absaugstelle geregelt.

Es hat sich gezeigt, dass es bei der Erfassung der Messwerte immer wieder zu Fehlmessungen kommt. Eine Ursache ist, dass durch Schlacke und/oder Stahlspritzer eine Druckentnahmestelle oder die Messstelle des Sensors verstopft werden. Eine weitere Fehlmessung entsteht dadurch, dass bei der Ausführung der Druckmessung als Ringleitung um einen Kühlkamin eines BOF-Konverters die Ringleitung mehrere Messöffnungen in den Kühlkamin aufweist und die Messung durch einen gemeinsamen Messumformer erfolgt. Diese Realisierung hat den Nachteil, dass geringste Anbackungen von Schlacke oder Metallspritzern an den Messöffnungen eine Durchflussabhängigkeit der Druckmessung zur Folge hat und dadurch das Messergebnis verfälscht.

Eine weitere Fehlmessung ergibt sich durch raue Bedingungen, welche in einer metallurgischen Anlage herrschen. Aufgrund von hohen Temperaturen ist die einwandfreie Funktionstüchtigkeit des Sensors gefährdet.

Aktuell verwendete Systeme basierend auf Druckentnahmen die einen permanenten Wartungsaufwand erfordern und teilweise an schwer erreichbaren, potentiell gefährlichen Stellen positioniert sind.

Zusätzlich ist bei gewissen Absaugstellen (z.B. Brennschneidmaschinen, etc.) eine Unterdruckmessung aufgrund der diffusen Charakteristik der Emission nicht möglich. Diese Emissionsquellen werden üblicherweise nur durch Vorgabe fixer Klappenpositionen geregelt.

### Zusammenfassung der Erfindung

Die Aufgabe der vorliegenden Erfindung liegt darin, eine Industrieanlage möglichst energieeffizient und verschleißarm zu betreiben.

Die Aufgabe wird bei dem eingangs genannten Verfahren dadurch gelöst, dass das optisches Sensorsystem durch eine Automatisierungseinheit so gesteuert wird, dass je nach Prozessphase zumindest ein vorbestimmter Bereich der Industrieanlage optisch erfasst und ein Ausschwallen von Rauchgasen in dem vorbestimmten Bereich erkannt wird. Das optische Sensorsystem quantifiziert eine Gesamtmenge des ausschwallenden Rauchgases. Eine Automatisierungseinheit steuert oder regelt, aufgrund der quantifizierten Gesamtmenge, zumindest eine Komponente der metallurgischen Anlage, insbesondere zumindest eine Komponente einer Entstaubungsanlage.

Das optische Sensorsystem besteht beispielsweise aus einer Kamera und einem Auswertesystem. Die Automatisierungseinheit gibt einen vorbestimmten Bereich der metallurgischen Anlage vor, in welchem das optische Sensorsystem die Gesamtmenge des ausschwallenden Rauchgases quantifizieren soll. Das Quantifizieren erfolgt beispielsweise durch die bekannte Methode des optischen Flusses. Jede Rauchgaswolke - welche in einer Industrieanlage, insbesondere in einer metallurgischen Anlage, entsteht - hat charakteristische Stellen, welche gut erkennbar sind. Dies wird ausgenutzt um aus mehreren Bildsequenzen - bspw. Bilder im 20ms Abstand - die Bewegung dieser charakteristischen Stellen auszuwerten, dadurch kann eine Geschwindigkeit ermittelt werden. Des Weiteren kann durch das optische Sensorsystem auch eine Größe der Rauchgaswolke bestimmt werden. Das optische Sensorsystem muss zu diesen Zwecken entsprechend kalibriert werden. Aus der Größe der Rauchgaswolke und der Geschwindigkeit kann dann auf einen Volumenstrom geschlossen werden. Die Quantifizierung erfolgt also je nach Anwendung durch Emissionsmenge, Emissionsmenge pro Zeit und/oder Emissionsgeschwindigkeit. Das optische Sensorsystem kann beispielsweise eine Bewegungsvorrichtung aufweisen, welche das optische Sensorsystem in verschieden Positionen bewegen kann - bspw. durch Linearbewegung und/oder Drehbewegung. Die Automatisierungseinheit gibt in diesem Fall der Bewegungsvorrichtung vor, in welche Position das optische Sensorsystem bewegt werden soll. Eine andere Möglichkeit ist, dass die Automatisierungseinheit dem optischen Sensorsystem vorgibt - für die Bestimmung der Gesamtmenge des ausschwallenden Rauchgases - nur bestimmte Bildbereiche zu berücksichtigen.

Der mit dem optischen Sensorsystem erfasste Bildbereich wird in vorbestimmte Bereiche unterteilt. Das bedeutet, es werden Bereiche definiert, in welchen die Abgasmengen optimiert werden sollen. So ist es möglich, mit einem optischen Sensorsystem auch mehrere verschiedene Aggregate oder mehrere vorbestimmte Bereiche eines Aggregats zu überwachen. Die vorbestimmten Bereiche werden durch die jeweilige Prozessphase festgelegt. Solche Prozessphasen und vorbestimmte Bereiche sind beispielsweise:
- Chargieren eines BOF Konverters:
   In dieser Prozessphase ist das Ausschwallen von Rauchgas in Richtung der Absaugleitungen erwünscht, jene Menge, die nicht in Richtung von Absaugleitungen geht ist vom optischen Sensorsystem zu erfassen. Es kann aber auch das Rauchgas erfasst werden, welches in Richtung der Absaugleitungen geht, um bei geringer Menge eine Leistung des Saugzuggebläses zu reduzieren.
- Schmelzphase beim EAF:
   Ausschwallungen von Rauchgas in Richtung des in die Dachkonstruktion eingelassenen Absaugtrichters sind in dieser Prozessphase erwünscht, alle anderen Ausschwallungen welche nicht in diese Richtung gehen sind vom optischen Sensorsystem zu quantifizieren, aber auch die anderen Ausschwallungen können quantifiziert werden um den Prozess energieeffizient zu steuern.
- Abstich beim Hochofen:
   Ausschwallungen von Rauchgas direkt beim Abstichloch in Richtung Absaugung sind erwünscht. Alle Ausschwallungen welche nicht in Richtung der Absaugung gehen, sollen vom optischen Sensorsystem quantifiziert werden, aber auch die anderen Ausschwallungen können quantifiziert werden um den Prozess energieeffizient zu steueren.
- Frischeprozess beim BOF Konverter:
   In dieser Prozessphase soll zwischen dem Konverter und einem Konverterschließring keine Ausschwallungen von Rauchgas auftreten, ansonsten sollen diese vom optischen Sensorsystem quantifiziert werden.
- Bei einer BOF Sekundärentstaubung in allen Prozessphasen:
   Es soll kein Ausschwallen von Rauchgas außerhalb einer Konverter Einhausung (Doghouse) stattfinden, falls dies doch erfolgt, soll das optische Sensorsystem dies quantifizieren. Eine Konverter Einhausung kann an zwei oder drei Seiten erfolgen. Es ist aber auch eine vierseitige Einhausung möglich, wobei diese Einhausung dann eine oder mehrere Türen aufweist.

Durch die Automatisierungseinheit werden entsprechend den Prozessphasen verschiedene vorbestimmte Bereiche definiert. Bei einem EAF können diese - stark vereinfacht - beispielsweise wie folgt aussehen:
- EAF chargieren: Ofendeckel offen - Ausschwallungen von Rauchgas über Ofen erlaubt
- EAF schmelzen: Spalt zwischen Ofen und Deckel: Ausschwallung von Rauchgas verboten
- EAF schmelzen: Spalt zwischen Elektrode und Deckel: Ausschwallung von Rauchgas und Einsaugen von Luft verboten

Die Automatisierungseinheit kann nun durch die in den vorbestimmten Bereichen quantifizierte Gesamtmenge des Ausschwallenden Rauchgases Komponenten der Industrieanlage und / oder die Entstaubungsanlage entsprechend ansteuern, damit unerwünschtes ausschwallendes Rauchgas vermieden wird. Dies kann dadurch erfolgen, dass eine Position von Regelklappen von Absaugstellen verändert wird, eine Absaugleistung eines Saugzuggebläse der Entstaubungsanlage erhöht oder erniedrigt wird oder direkt in eine Prozessführung der metallurgischen Anlage eingegriffen wird - beispielsweise Elektrodenregelung, Betriebsmittelzufuhr uva..

Unter Entstaubungsanlage wird im Zusammenhang mit dieser Erfindung ganz allgemein eine Anlage, welche Rauchgas abziehen kann, verstanden - also eine Rauchgasabzugseinrichtung, welche gegebenenfalls auch nachfolgend Reinigungseinrichtungen für das Rauchgas aufweisen kann.

Die Automatisierungseinheit kann beispielsweise bei der Steuerung der Entstaubungsanlage wie im Folgenden beschrieben vorgehen. Zu jedem vorbestimmten Bereich werden in der Automatisierungseinheit Prozessphasen abhängige Regeln für das Abzugsgebläse und die Position der Regelklappen von Absaugstellen definiert. Befindet sich der Ofen während des Betriebs in einem vordefinierten Zustand, wird die zugehörige Regel aktiviert und dieser vordefinierte Zustand bleibt aufrecht, solange das optische Sensorsystem kein unerwünschtes Ausschwallen von Rauchgas quantifiziert. Bei Detektion von Ausschwallen von Rauchgas wird beispielsweise die Absaugleistung des Saugzuggebläses schrittweise erhöht. Bis das Ausschwallen von Rauchgas verschwunden ist. Es kann natürlich auch die Absaugleistung solange verringert werden bis Ausschwallen von Rauchgas erkannt wird, um eine besonders energiesparende Fahrweise der metallurgischen Anlage zu gewährleisten. Dies würde einer sog. P, PI oder PID Regelung der Entstaubungsanlage entsprechen.

Jede andere vorsteuerungsbasierte, Eingangs / Ausgangs linearisierte oder aber auch nichtlineare Regelung ist aber ebenfalls denkbar.

Ein idealer Zustand wäre ein sogenanntes Pumpen des Ausschwallens von Rauchgas. In diesem Fall würden sich die Abgasleistung und die auftretende Emission gerade im Gleichgewicht befinden.

Eine vorteilhafte Ausführung sieht vor, dass das eine optische Sensorsystem oder mehrere optische Sensorsysteme je nach Prozessphase mehrere vorbestimmte Bereiche der Industrieanlage erfassen.

Das Ausschwallen von Rauchgas in den jeweils vorbestimmten Bereichen wird erkannt und eine jeweilige Einzelmenge, im jeweiligen vorbestimmten Bereich, quantifiziert. Die Gesamtmenge wird aus der Summe der Einzelmengen ermittelt. Es können beispielsweise mehrere optische Sensorsysteme das Ausschwallen von Rauchgas von unterschiedlichen Richtungen erfassen, um eine dreidimensionale Erfassung des ausschwallenden Rauchgases zu ermöglichen. Es ist aber auch denkbar, dass jeweils verschiedene Bereiche der Industrieanlage erfasst werden.

Eine vorteilhafte Ausführungsform sieht vor, dass das eine optische Sensorsystem oder mehrere optische Sensorsysteme je nach Prozessphase mehrere vorbestimmte Bereiche der Industrieanlage erfassen. Diese das Ausschwallen von Rauchgas in diesen vorbestimmten Bereichen erkennen und eine jeweilige Einzelmenge, im jeweiligen vorbestimmten Bereich, quantifiziert. Die Einzelmengen werden abhängig vom jeweiligen vorbestimmten Bereich mit einem Gewichtungsfaktor multipliziert. Die Gesamtmenge wird aus der Summe der mit den Gewichtungsfaktoren multiplizierten Einzelmengen ermittelt. Diese Ausführungsform hat den Vorteil, dass eine dreidimensionale und somit genauere Bestimmung der Emissionsmenge möglich ist. Des Weiteren kann durch den Gewichtungsfaktor auch jenen Bereichen, die besonders kritisch sind - weil sich in diesen Bereichen bspw. Personen aufhalten - eine hohe Bedeutung zugewiesen werden.

Eine besonders vorteilhafte Ausführungsform sieht vor, dass die Komponente eine Regelklappe oder ein Antrieb eines Saugzuggebläses ist. Dies Komponenten eigenen sich besonders gut um die Entstaubungsanlage zu steuern oder regeln.

Eine bevorzugte Ausführungsform sieht vor, dass der Automatisierungseinheit weitere Messparameter, insbesondere Ofendruck, Prozessdaten, Daten aus einem Prozessmodel zugeführt werden. Dies hat den Vorteil, dass die Industrieanlage besonders Energieeffizient geregelt oder gesteuert werden kann.

Eine zweckmäßige Ausführung sieht vor, dass Sensoren, insbesondere Ofendrucksensoren, aufgrund der Gesamtmenge des ausschwallenden Rauchgases kalibriert werden. Da Sensoren einem gewissen Verschleiß durch die raue Umgebung in einer metallurgischen Anlage ausgesetzt sind, ist es sehr vorteilhaft diese einem Plausibilitätscheck, aufgrund von dem erfassten Ausschwallenden Rauchgasen durch das optische Sensorsystem, zu unterziehen und gegebenenfalls diese entsprechend zu kalibrieren.

Eine weitere vorteilhafte Ausführung sieht vor, dass die Automatisierungseinheit eine modellprädiktive Regelung der metallurgischen Anlage ausführt. Durch diese Ausführungsform ist eine Bestimmung einer gesamten emittierten Rauchgasmenge möglich. Dies bedeutet, dass sowohl ein von der Entstaubungsanlage erfasster Volumenstrom des Rauchgases als auch ein von der Entstaubungsanlage nicht erfasster Volumenstrom des Rauchgases mit dem optischen Sensorsystem quantifiziert werden können. Diese Volumenströme können in einem Prozessmodell verwendet werden und man erhält Rückschlüsse auf ein Emissionsverhalten von Einsatzmaterialien (z. B. Schrott). Mittels dieser modellprädiktiven Regelung ist eine prädiktive Einstellung der Anlage (z.B. Set-Points) möglich, um eine bessere Erfassung der rasch auftretenden Emissionen oder Ausschwallen von Rauchgas zu ermöglichen.

Eine besonders vorteilhafte Ausführungsform sieht vor, dass die Automatisierungseinheit einen selbstlernenden Algorithmus aufweist. Aufgrund von variierender Zusammensetzung der Einsatzmaterialien (z.B. Schrott) müssen Absaugmengen von Entstaubungsanlagen immer wieder spezifisch angepasst werden. Üblicherweise bleibt die Schrottqualität über einen gewissen Zeitraum gleich und kann sich danach aber wieder ändern (z.B. Neuanlieferung). Während dieser Zeit dient der selbstlernende Algorithmus dazu, die optimale Einstellung (ausreichende Emissionserfassung bei minimalem Energieverbrauch) der Industrieanlage, insbesondere der Entstaubungsanlage, zu finden.

Die erfindungsgemäße Aufgabe wird auch durch die eingangs genannte Industrieanlage gelöst, welche eine Automatisierungseinheit aufweist, die das davor beschriebene Verfahren ausführt. Es ergeben sich dieselben Vorteile, die bereits beim Verfahren aufgeführt wurden.

Eine vorteilhafte Ausführung sieht vor, dass die metallurgische Anlage eine Entstaubungsanlage aufweist.

### Kurze Beschreibung der Zeichnungen

Fig. 1 eine schematische Darstellung einer Industrieanlage mit einem Elektrolichtbogenofen und einem optisches Sensorsystem.
Fig. 2 eine schematische Darstellung einer Industrieanlage mit einem BOF Konverter und einem optisches Sensorsystem.
Fig. 3 eine schematische Darstellung einer Industrieanlage mit einem BOF Konverter, einer Konverter Einhausung und einem optisches Sensorsystem.
Fig. 4 eine schematische Darstellung einer Industrieanlage mit zwei optisches Sensorsystemen.

### Beschreibung der Ausführungsformen

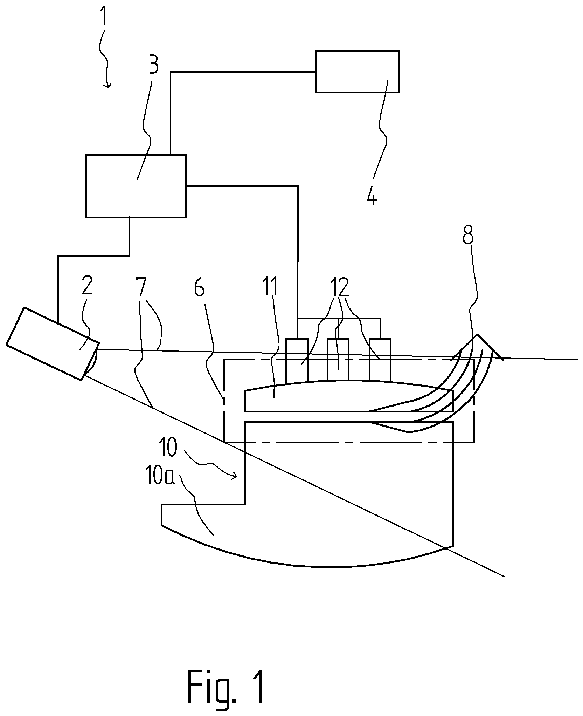

In Fig. 1 ist einer Industrieanlage 1 mit einem optischen Sensorsystem 2 dargestellt. Die Industrieanlage 1 besteht aus einem Elektrolichtbogenofen 10 mit einem Schmelzgefäß 10a, einem Deckel 11 und Elektroden 12. Mit dem optischen Sensorsystem 2 kann ein Ausschwallen von Rauchgas 8 erkannt werden. Das optische Sensorsystem 1 hat einen Beobachtungsbereich 7, welcher den vorbestimmter Bereich 6 - in welchem ein Ausschwallen von Rauchgas 8 detektiert und quantifiziert werden soll - erfassen kann. Eine Automatisierungseinheit 3 ist mit dem Elektrolichtbogenofen 10 und dem optischen Sensorsystem 2 verbunden. Dieses Automatisierungssystem 3 steuert oder regelt den Elektrolichtbogenofen anhand der von der optischen Sensoreinheit 2 übermittelten quantifizierten Menge von ausschwallendem Rauchgas 8. In einem Speicher 4 sind diverse Informationen abgelegt, wie beispielsweise in welcher Prozessphase welcher vorbestimmter Bereich 6 erfasst werden soll oder es kann auch die Information abgelegt sein, in welchem vorbestimmten Bereich 6 Ausschwallen von Rauchgas 8 besonders kritisch ist und dies dann durch einen Gewichtungsfaktor entsprechen bewertet wird. Dieser Gewichtungsfaktor wird mit der quantifizierten Menge von Ausschwallendem Rauchgas 8 multipliziert und signalisiert dadurch der Automatisierungseinheit 3 die Wichtigkeit der jeweiligen vorbestimmten Bereiche 6. Die Gewichtungsfaktoren sollen unter anderem dazu dienen, dass vorbestimmte Bereiche 6 in welchen sich Personen befinden können, besonders kritisch sind und deshalb entsprechend rasch Maßnahmen getroffen werden müssen und die Automatisierungseinheit 3 die metallurgische Anlage 1 entsprechend rasch ansteuern muss.

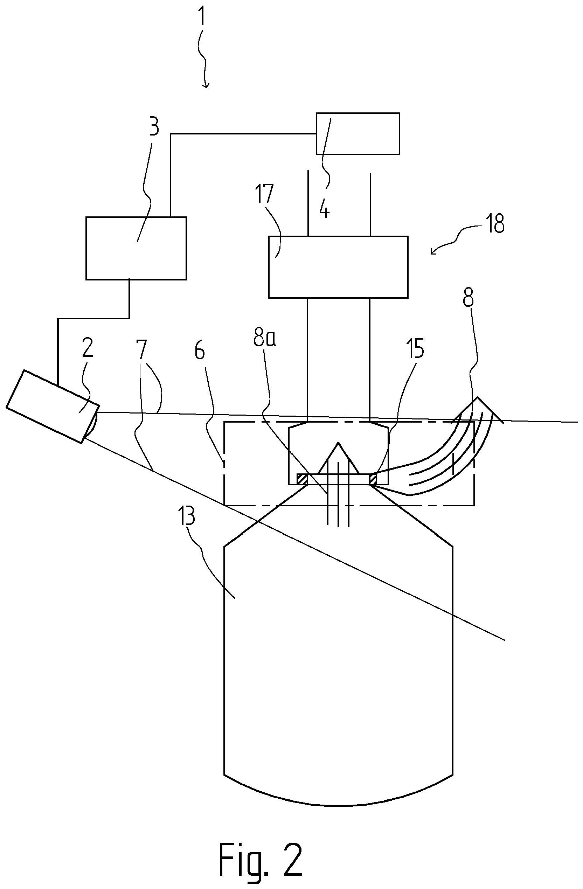

In Fig. 2 ist eine metallurgische Anlage 1 mit einem BOF Konverter 13 dargestellt. Eine Entstaubungsanlage 18 sorgt dafür, dass über die Abzugshaube 14 mit einem Saugzuggebläse 17 entstehende Rauchgase abgezogen werden. Ein Schließring 15 dient dazu, dass die Rauchgase möglichst vollständig abgesaugt werden. Ausschwallende Rauchgase 8 welche beim Schließring 15 entweichen sind unerwünscht und sollen durch das optische Sensorsystem 2 detektiert und quantifiziert werden. Die Entstaubungsanlage 18 saugt ausschwallendes Rauchgas 8a durch ein Rohrleitungssystem und das Saugzuggebläse 17 ab. Dieses ausschwallende Rauchgas 8a kann in bestimmten Prozessphasen ebenfalls quantifiziert werden. Dies ist beispielsweise dann der Fall, wenn der Konverter beim Chargieren nach vorne gekippt wird - dieser Bereich deshalb vom optischen Sensorsystem 2 gut erfassbar ist - und Schrott in den Konverter 13 chargiert wird.

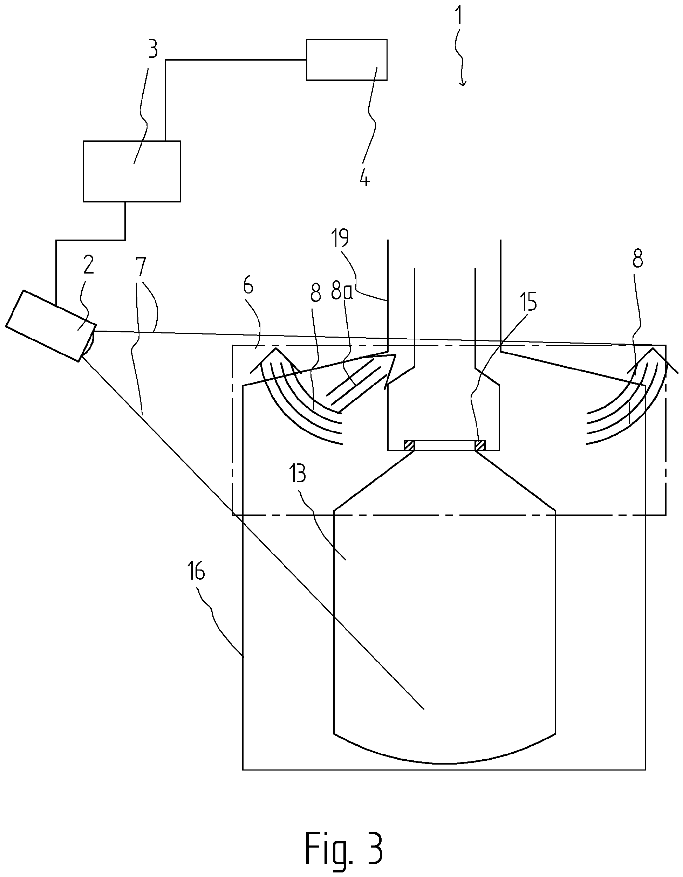

In der Fig. 3 ist ebenfalls eine Industrieanlage 1 mit einem Konverter 13 dargestellt. Des Weiteren ist im Unterschied zu Fig. 2 auch die Konverter Einhausung 16 (Doghouse) dargestellt. Aus der Konverter Einhausung 16 sollte zu keinem Zeitpunkt Ausschwallendes Rauchgas 8 austreten. Das gesamte ausschwallende Rauchgas 8a sollte durch eine Sekundärentstaubung 19 abgezogen werden. Wenn das optische Sensorsystem 2 Ausschwallendes Rauchgas 8 feststellt, sollte die Automatisierungseinrichtung 3 die Sekundärentstaubung 19 und / oder die Industrieanlage 1 entsprechend ansteuern, um das Ausschwallen von Rauchgas 8 zu vermeiden.

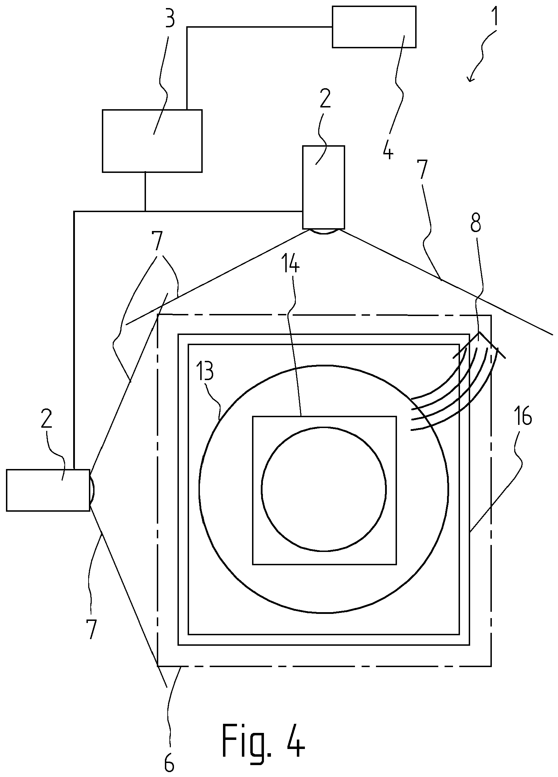

In Fig. 4 ist eine vereinfachte Draufsicht der metallurgischen Anlage aus Fig. 3 dargestellt. In dieser Darstellung sind zwei optische Sensorsystem 2 dargestellt die einen vorbestimmten Bereich 6 durch den Beobachtungsbereich 7 erfassen. Durch diese Anordnung von zwei optischen Sensorsystemen 2 kann eine dreidimensionale Betrachtung erfolgen. In diesem Fall soll beispielsweise der Bereich um die Konverter Einhausung 16 betrachtet werden, wo kein Ausschwallen von Rauchgas 8 erwünscht ist.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung - entsprechend der Ansprüche - zu verlassen.

### Bezugszeichenliste

- 1: Industrieanlage
- 2: optisches Sensorsystem
- 3: Automatisierungseinheit
- 4: Speicher
- 6: vorbestimmter Bereich
- 7: Beobachtungsbereich
- 8, 8a: Ausschwallen von Rauchgas
- 10: Elektrischer Lichtbogenofen (EAF)
- 10a: Schmelzgefäß
- 11: Ofendeckel
- 12: Elektroden
- 13: Konverter
- 14: Abzugshaube
- 15: Schließring
- 16: Konverter Einhausung
- 17: Saugzuggebläse
- 18: Entstaubungsanlage
- 19: Sekundärentstaubungsanlage

## Patentansprüche

1. Verfahren zur Steuerung oder Regelung einer Industrieanlage (1), insbesondere einer metallurgischen Anlage, welche unterschiedliche Prozessphasen aufweist, umfassend zumindest ein optisches Sensorsystem (2), insbesondere eine Kamera, **dadurch gekennzeichnet, dass**
- das optisches Sensorsystem (2) durch eine Automatisierungseinheit (3) derart gesteuert wird, dass je nach Prozessphase zumindest ein vorbestimmter Bereich (6) der Industrieanlage (1) erfasst wird und Ausschwallen von Rauchgasen (8, 8a) in dem vorbestimmten Bereich (6) erkannt wird,
- das optische Sensorsystem (2) quantifiziert eine Gesamtmenge des ausschwallenden Rauchgases (8, 8a),
- wobei die Automatisierungseinheit, aufgrund der quantifizierten Gesamtmenge, zumindest eine Komponente der Industrieanlage (1), insbesondere zumindest eine Komponente einer Entstaubungsanlage (18), steuert oder regelt.

2. Verfahren zur Steuerung oder Regelung einer Industrieanlage (1) nach Anspruch 1, **dadurch gekennzeichnet, dass**
- das eine optische Sensorsystem (2) oder mehrere optische Sensorsysteme (2) je nach Prozessphase mehrere vorbestimmte Bereich (6) der Industrieanlage (1) erfassen,
- wobei diese Ausschwallen von Rauchgas (8, 8a) in diesen vorbestimmten Bereichen (6) erkennen und eine jeweilige Einzelmenge, im jeweiligen vorbestimmten Bereich (6), quantifizieren,
- wobei die Gesamtmenge aus der Summe der Einzelmengen ermittelt wird.

3. Verfahren zur Steuerung oder Regelung einer Industrieanlage (1) nach Anspruch 1, **dadurch gekennzeichnet, dass**
- das eine optische Sensorsystem (2) oder mehrere optische Sensorsysteme (2) je nach Prozessphase mehrere vorbestimmte Bereich (6) der Industrieanlage (1) erfassen,
- wobei diese ausschwallen von Rauchgas (8, 8a) in diesen vorbestimmten Bereichen (6) erkennen und eine jeweilige Einzelmenge, im jeweiligen vorbestimmten Bereich (6), quantifizieren,
- die Einzelmengen abhängig vom jeweiligen vorbestimmten Bereich (6) mit einem Gewichtungsfaktor multipliziert werden
- die Gesamtmenge aus der Summe der mit den Gewichtungsfaktoren multiplizierten Einzelmengen ermittelt wird.

4. Verfahren zur Steuerung oder Regelung einer Industrieanlage (1) nach Anspruch 1 - 3, **dadurch gekennzeichnet, dass** die Komponente eine Regelklappe oder ein Antrieb eines Saugzuggebläses (17) ist.

5. Verfahren zur Steuerung oder Regelung einer Industrieanlage nach Anspruch 1 -4, **dadurch gekennzeichnet, dass** der Automatisierungseinheit (3) weitere Messparameter, insbesondere Ofendruck, Prozessdaten, Daten aus einem Prozessmodel zugeführt werden.

6. Verfahren zur Steuerung oder Regelung einer Industrieanlage (1) nach Anspruch 1 - 5, **dadurch gekennzeichnet, dass** Sensoren, insbesondere Ofendrucksensoren, aufgrund der Gesamtmenge des ausschwallenden Rauchgases (8, 8a) kalibriert werden.

7. Verfahren zur Steuerung oder Regelung einer Industrieanlage (1) nach Anspruch 1 - 6, **dadurch gekennzeichnet, dass** die Automatisierungseinheit (3) eine modellprädiktive Regelung der Industrieanlage (1) ausführt.

8. Verfahren zur Steuerung oder Regelung einer Industrieanlage (1) nach Anspruch 1 -7, **dadurch gekennzeichnet, dass** das Automatisierungseinheit (3) einen selbstlernenden Algorithmus aufweist.

9. Industrieanlage (1), insbesondere eine metallurgische Anlage, mit einem optischen Sensorsystem (2), **dadurch gekennzeichnet, dass** eine Automatisierungseinheit (3) das Verfahren nach Anspruch 1-8 ausführt.

10. Industrieanlage (1) mit einem optischen Sensorsystem (2) nach Anspruch 9, **dadurch gekennzeichnet, dass** die Industrieanlage (1) eine Entstaubungsanlage (18) aufweist.
